# FASCICULE DE BREVET EUROPEEN

(11) **EP 0 933 014 B1**
(45) Date de publication et mention de la délivrance du brevet: **23.10.2002**
(21) Numéro de dépôt: 99490003.3
(22) Date de dépôt: 28.01.1999
(51) Int. Cl.: A01D 34/86, E02F 5/28

(54) **Engin de nettoyage à broyeur incorporé**
Reinigungsvorrichtung mit integriertem Häcksler
Cleaning device with incorporated shredder

(30) Priorité: 29.01.1998 FR 9801247
(43) Date de publication de la demande: 04.08.1999
(73) Titulaire: Entreprise Lebleu, 59181 Steenwerck (FR)
(72) Inventeur: Lebleu, Michel, 59181 Steenwerck (FR)
(74) Mandataire: Hennion, Jean-Claude

(56) Documents cités:
- EP-A- 0 030 568
- DE-A- 2 415 230
- DE-A- 2 634 978
- DE-A- 3 039 595
- DE-B- 2 159 944
- FR-A- 2 535 157
- GB-A- 2 260 683

## Description

La présente invention concerne un engin de nettoyage comportant un bras articulé dont l'extrémité libre est équipée d'un dispositif de coupe de grande largeur, destiné tout particulièrement au nettoyage des fossés. Elle concerne plus précisément un engin de ce type qui est équipé d'un moyen de broyage de telle sorte que les résidus végétaux broyés puissent rester à demeure sur le sol après le passage de l'engin de nettoyage.

Un tel engin est connu, par exemple, de la publication DE-2 634 978-A.

Le nettoyage des fossés est une opération peu fréquente qui n'intervient que si la prolifération des végétaux est susceptible d'être gênante notamment en perturbant l'écoulement des eaux. La végétation a donc tout le loisir de pousser sans contrainte de sorte que lors du nettoyage il s'agit de couper non seulement des herbes mais également des plantes de toutes sortes, des arbustes, voire même des petits arbres. Pour réaliser une telle coupe, l'engin de nettoyage doit être équipé d'un dispositif de coupe adéquat sur le plan de la résistance mécanique et qui de plus puisse être orienté en sorte d'épouser le profil du fossé. Pour cela, l'engin de nettoyage comporte généralement un bras articulé dont l'extrémité libre est équipée d'un dispositif de coupe de grande largeur qui est lui-même prolongé par un réceptacle permettant la collecte des végétaux coupés. En effet il n'est pas envisageable de laisser sur place dans le fossé les végétaux qui viennent d'y être coupés.

Ainsi en fonctionnement l'engin de nettoyage, conduit par un opérateur, longe latéralement le fossé ; l'opérateur commande le bras articulé de manière à ce que celui-ci soit déporté au-dessus du fossé et à ce que le dispositif de coupe vienne au ras du flanc à nettoyer. Lorsque le réceptacle est suffisamment rempli, l'opérateur remonte le bras articulé, déplace celui-ci par exemple en le faisant pivoter vers l'arrière de l'engin, actionne l'ouverture du réceptacle en sorte de laisser tomber l'ensemble des végétaux coupés qu'il contient pour former un tas. Ultérieurement les tas ainsi constitués pourront être soit brûlés sur place soit éventuellement collectés.

Le but de la présente invention est de proposer un engin de nettoyage notamment de fossés, qui évite d'avoir à réaliser l'élimination des végétaux coupés par le feu ou par une collecte ultérieure.

Ce but est parfaitement atteint par l'engin de l'invention qui est du type précité et qui se caractérise en ce qu'il comporte, montés à l'arrière de l'engin, une trémie d'alimentation et un broyeur disposé sous la trémie ; la trémie d'alimentation est dimensionnée en sorte de recevoir les végétaux coupés déversés depuis le réceptacle du bras articulé ; enfin la trémie d'alimentation comprend un premier montant transversal consistant en une plaque fixe et un second montant transversal consistant en un cylindre tournant, à faible vitesse, équipé d'ailettes radiales, le sens de rotation dudit cylindre étant tel que les ailettes rabattent les végétaux coupés alimentés dans la trémie vers l'intérieur de l'intervalle entre la plaque fixe et le cylindre.

Selon la disposition particulière de l'invention, lorsque le réceptacle est rempli de végétaux coupés, l'opérateur déplace le bras articulé vers l'arrière de l'engin, au-dessus de la trémie, ouvre le réceptacle en sorte que les végétaux coupés tombent dans l'intervalle entre la plaque fixe et le cylindre tournant ; par leur rotation, les ailettes radiales du cylindre rabattent progressivement les végétaux coupés vers le broyeur situé en-dessous de la trémie d'alimentation.

Le demandeur a en effet remarqué que si la trémie d'alimentation était constituée de deux plaques fixes, certains végétaux coupés, en particulier des tiges rigides de plantes ou d'arbustes pouvaient rapidement colmater la trémie. Par contre la présence des ailettes radiales, apte à faire se déplacer progressivement les végétaux, évite un tel colmatage.

De préférence, chaque ailette est recourbée, vers son extrémité libre, dans le sens de rotation de manière à accentuer l'effet de rabattement.

Dans un mode préféré de réalisation, le cylindre tournant est muni de deux ailettes radiales, diamétralement opposées, et le cylindre tourne à une vitesse comprise entre 50 et 60 tours par minute.

Le broyeur, disposé sous la trémie d'alimentation, est avantageusement constitué d'un tambour à fléaux et de contre-lames. Le tambour tourne à grande vitesse, par exemple entre 2 100 et 2 200 tours par minute. A cette vitesse, les fléaux dont est munie la périphérie du tambour prennent une orientation radiale et passent à proximité des contre-lames. Les végétaux provenant de la trémie sont soumis à l'action mécanique de broyage de sorte que les végétaux coupés provenant de la trémie donnent, après passage du niveau du broyeur, des résidus broyés de petites dimensions. De préférence, sous le broyeur est disposée une tôle déflectrice courbe dont l'effet est de projeter vers l'arrière de l'engin les résidus broyés qui sont ainsi dispersés sur le sol après le passage de l'engin de nettoyage. Cette large dispersion de résidus de petites dimensions laissés sur le sol n'est pas préjudiciable pour le développement ultérieur des végétaux.

La présente invention sera mieux comprise à la lecture de la description qui va être faite d'un exemple préféré de réalisation d'un engin de nettoyage de fossé équipé, à l'arrière, d'une trémie d'alimentation pour les végétaux coupés, d'un broyeur et d'une plaque déflectrice, illustré par le dessin annexé dans lequel:

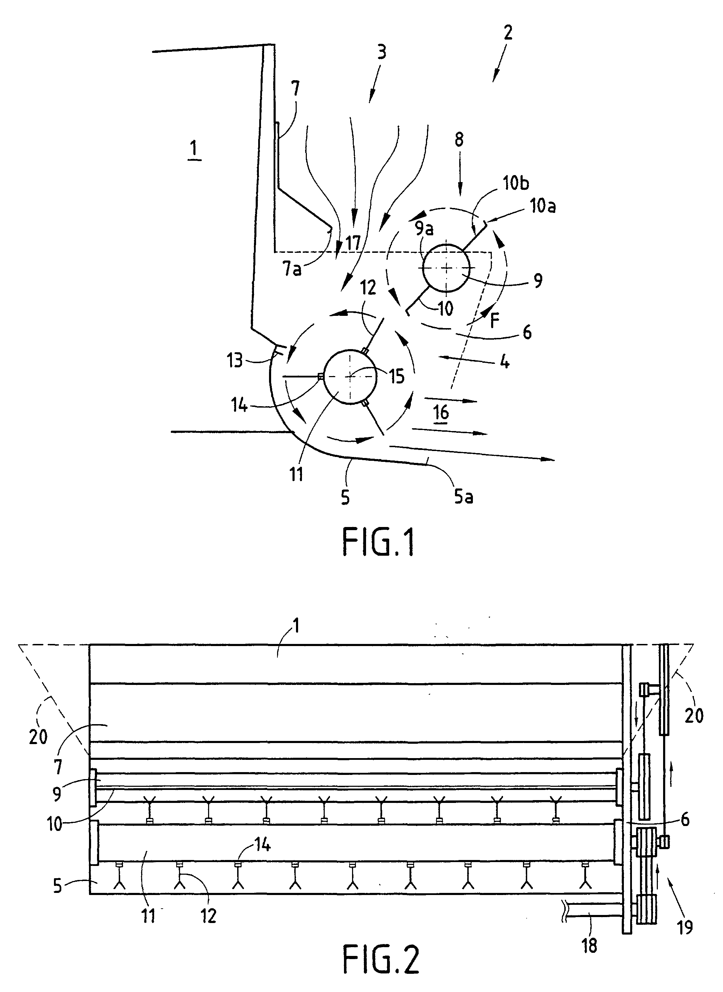

- la figure 1 est une représentation très schématisée, en coupe longitudinale, de la partie arrière avec la trémie d'alimentation, le broyeur et la plaque déflectrice,
- et la figure 2 est une représentation schématique, vue de l'arrière, de la figure 1 sans le capotage.

Dans sa structure générale, l'engin de nettoyage de fossé de l'invention est d'un type connu en ce qu'il s'agit d'un engin auto-tracté, avec un poste de pilotage, équipé d'un bras articulé à l'extrémité libre duquel est disposé un dispositif de coupe de grande largeur. Le système d'articulation du bras est tel qu'il est possible à l'opérateur de déplacer le bras dans des positions très variables en sorte que le dispositif de coupe puisse venir au ras du sol dans quelque configuration de fossé de ce soit. De plus le bras est monté pivotant de manière à pouvoir lui faire adopter tout écart angulaire sur 360 °, autour de l'engin.

Le dispositif de coupe est particulièrement résistant sur le plan mécanique et apte à couper des végétaux se présentant sous la forme d'herbes, de plantes, d'arbustes, voire même de petits arbres. Il peut s'agir selon un exemple non limitatif, d'un système à deux lames crantées et superposées, l'une étant fixe et l'autre entraînée selon un déplacement transversal alternatif.

Selon la présente invention, l'engin est muni à sa partie arrière 1 d'un ensemble 2 comportant une trémie 3 d'alimentation, un broyeur 4, une plaque déflectrice 5 et un capotage (non représenté).

La trémie d'alimentation 3, qui s'étend sur toute la largeur de l'engin, est constituée de deux montants transversaux et de deux montants latéraux. Le premier montant transversal, qui est fixé sur l'arrière 1 de l'engin, en partie haute de la carrosserie, est une plaque fixe 7, coudée formant en quelque sorte un demi-entonnoir. Le second montant transversal 8 est constitué d'un cylindre 9 tournant muni sur la périphérie de deux ailettes 10 diamétralement opposées, montées radialement sur toute la longueur du cylindre 9. Chaque ailette 10 a son extrémité libre 10a qui forme un coude avec la partie 10b radiale de l'ailette 10. L'inclinaison de l'extrémité 10a va dans le sens de rotation F du cylindre 9, ladite rotation étant effectuée, dans l'exemple illustré, dans le sens inverse des aiguilles d'une montre.

La partie coudée 7b, limitant l'intervalle 17 entre elle et le cylindre tournant 9, a pour effet de ralentir le passage des végétaux vers le broyeur 4 et de réaliser une alimentation plus régulière de celui-ci ; en combinaison avec l'action des ailettes 10 et de la surface extérieure tournante 9a du cylindre 9.

Le broyeur 4 est composé d'un tambour 11 fléaux 12 et d'un jeu de contre-lames 13. Les fléaux 12 ou marteaux sont montés pivotants sur la périphérie du tambour 11 autour d'axes 14 parallèles à l'axe 15 de rotation du tambour 11. Les fléaux 12 ont une répartition équilibrée sur la périphérie du tambour 15 afin d'éviter les phénomènes de balourd. Dans l'exemple illustré on a représenté trois fléaux situés sur le même tronçon, ces trois fléaux 12 étant décalés l'un par rapport à l'autre de 120 °. Cette même répartition de trois fléaux, décalés de 120°, se reproduit d'un tronçon à l'autre mais avec un décalage angulaire, ce qui évite que tous les fléaux passent en même temps en regard des contre-lames 13.

De préférence les fléaux 12 sont du type en Y avec contre-lames droites ou encore sont des couteaux droits avec contre-lames disposées en peigne.

La plaque déflectrice 5 est fixée à la partie arrière 1 de l'engin sous les contre-lames 13 ; elle s'étend en-dessous du tambour 11, avec une courbure sensiblement parallèle à la périphérie dudit tambour 11.

L'ensemble 2 est monté sur un châssis 6 qui est lui-même fixé sur la partie arrière 1 de l'engin. Le capotage recouvre l'ensemble 2 de manière à éviter que les parties tournantes soient directement accessibles mais en laissant une ouverture supérieure au niveau de la trémie 3 et une ouverture inférieure 16 au-dessus de l'extrémité arrière 5a de la plaque déflectrice 5.

Avantageusement, l'engin dans sa structure conventionnelle comporte un système d'entraînement 18 par moteur hydraulique. Dans ce cas il est possible de réaliser l'entraînement du tambour à un fléau 11 et du cylindre tournant 9 à partir de ce même moteur hydraulique, par mise en oeuvre de différents jeux 19 de poulies et de courroies.

Lorsque l'opérateur estime que le réceptacle qui prolonge le dispositif de coupe est suffisamment rempli de végétaux coupés, il déplace le bras articulé en le faisant pivoter vers l'arrière de l'engin et en le plaçant au-dessus de la trémie 3. Cette trémie 3 a une largeur utile qui est au minimum égale à la largeur du réceptacle. Cette largeur peut être de l'ordre de 3 mètres. De préférence les montants latéraux de la trémie sont constitués par des plaques fixes inclinées 20 qui ont donc un écartement en partie haute qui est supérieur à cette largeur utile, par exemple de l'ordre de 3,80 mètres dans le cas d'une largeur utile de 3 mètres.

Les végétaux, quels que soient leur forme et leur dimension, tombent dans la trémie 3, entre la plaque fixe 7, les plaques latérales 20 et le second montant transversal 8 constitué par le cylindre 9 et ses ailettes 10. Le cylindre 9 tourne à faible vitesse de sorte que les ailettes 10 rabattent progressivement les végétaux vers l'intervalle 17 situé entre la partie basse 7a de la plaque fixe 7 et le tambour 9, cet intervalle 17 constituant le passage le plus étroit de la trémie 3.

Au-delà de cet intervalle 17, les végétaux se trouvent sous l'action du broyeur 4. Le tambour 11 tourne à grande vitesse ; les fléaux 12, en disposition radiale, frappent les végétaux et les forcent à passer dans les espaces prévus au niveau des contre-lames 13 pour chaque tronçon du tambour 11 de sorte que l'on obtient un broyage de tous les végétaux sous forme de déchets de petites dimensions.

Sous l'action de la grande vitesse et de la plaque déflectrice 5, ces déchets broyés sont projetés hors de l'ensemble 2 par l'ouverture inférieure 16 et répartis sur une très grande surface sur le sol à l'arrière de l'engin.

Du fait du broyage des végétaux en petites dimensions, et également de leur répartition sur une grande surface, la présence des déchets broyés sur le sol ne présente pas d'inconvénient pour le développement ultérieur de la végétation sur ladite surface.

Dans un exemple précis de réalisation qui a donné toute satisfaction, la vitesse de rotation du cylindre tournant 9 était de l'ordre de 50 à 60 tours / minute, la vitesse de rotation du tambour 11 était de l'ordre de 2 000 à 2 200 tours/minute, s'agissant de fléaux 12 du type. en Y avec contre-lames droites. La distance entre l'extrémité inférieure 7a de la plaque 7 et la surface extérieure du cylindre 9 était de l'ordre de 40 cm. Le diamètre du cylindre 9 était de l'ordre de 18 cm. La longueur totale des ailettes 10 était d'une douzaine de centimètres.

La présente invention n'est pas limitée au mode précis de réalisation qui vient d'être décrit à titre d'exemple non exhaustif. En particulier, tout type de broyeur peut-être mis en oeuvre pour autant d'obtenir des déchets de taille suffisamment réduite. Le broyeur à fléaux présente, dans le cadre de l'invention, un avantage significatif dans la mesure où si un déchet particulièrement compact, par exemple un morceau de tronc d'arbre, est ramassé par le dispositif de coupe lors du nettoyage du fossé, sa présence dans le broyeur ne sera pas rédhibitoire puisque le fléau concerné va pivoter autour de son axe 14, s'escamoter et laisser le passage audit morceau de tronc d'arbre, sans préjudice matériel pour le broyeur et sans inconvénient majeur pour la végétation.

Par ailleurs le cylindre tournant 9 peut être équipé d'un nombre d'ailettes différent de deux, notamment 3 ou 4. Il serait également possible de modifier la forme et la disposition des ailettes pour autant que l'on obtienne l'effet de rabattement qui est recherché.

On a bien compris, à la lecture de la description qui a été faite, qu'il est envisageable d'équiper un engin auto-tracté pour le nettoyage des fossés ayant une structure conventionnelle en rapportant sur la partie de celui-ci l'ensemble 2 constitué de la trémie d'alimentation du broyeur, de la tôle déflectrice, du capotage et de l'ensemble des moyens permettant l'entraînement des pièces tournantes. C'est une autre possibilité de concevoir un nouvel engin de nettoyage dont la structure intègre l'ensemble de ces éléments.

## Revendications

1. Engin de nettoyage, notamment de fossés comportant un bras articulé dont l'extrémité libre est équipée d'un dispositif de coupe de grande largeur qui est lui-même prolongé par un réceptacle permettant la collecte des végétaux coupés, **caractérisé en ce qu'**il comporte, à sa partie arrière (1) une trémie d'alimentation (3) et un broyeur (4) disposé sous la trémie (3), **en ce que**, la trémie (3) est dimensionnée en sorte de recevoir les végétaux coupés déversés depuis le réceptacle du bras articulé, et **en ce qu'**elle comprend un premier montant transversal consistant en une plaque fixe (7) et un second montant transversal consistant en un cylindre tournant (9), à faible vitesse, équipé d'ailettes radiales (10), le sens de rotation dudit cylindre étant tel que les ailettes (10) rabattent les végétaux coupés alimentés dans la trémie vers l'intérieur de l'intervalle (17) entre la plaque fixe (7) et le cylindre (9).

2. Engin selon la revendication 1 **caractérisé en ce que** chaque ailette (10) est recourbée, vers son extrémité libre (10a), dans le sens de rotation.

3. Engin selon l'une des revendications 1 ou 2 **caractérisé en ce que**, le cylindre tournant est muni de deux ailettes radiales (10), diamétralement opposées, et le cylindre tourne à une vitesse comprise entre 50 et 60 tours par minute.

4. Engin selon l'une des revendications 1 à 3 **caractérisé en ce que** la plaque fixe (7) est courbée pour limiter l'intervalle (17).

5. Engin selon l'une des revendications 1 à 4 **caractérisé en ce que** le broyeur (4) est constitué d'un tambour (11) à fléaux (12) et de contre-lames (13).

6. Engin selon la revendication 5 **caractérisé en ce que** la vitesse de rotation du tambour (11) est de l'ordre de 2 100 et 2 200 tours par minute.

7. Engin selon l'une des revendications 1 à 6 **caractérisé en ce que** sous le broyeur (4) est disposée une tôle déflectrice (5) courbe dont l'effet est de projeter vers l'arrière de l'engin les résidus broyés qui sont ainsi dispersés sur le sol après le passage de l'engin de nettoyage.

## Patentansprüche

1. Vorrichtung zum Reinigen insbesondere von Gräben, die umfasst einen schwenkbaren Arm, dessen freies Ende mit einer Schneideeinrichtung großer Breite ausgestattet ist, in deren Verlängerung ein Auffangbehälter angeordnet ist, der das Sammeln der abgeschnittenen Pflanzen erlaubt, **dadurch gekennzeichnet, dass** die Vorrichtung an ihrem vorderen Abschnitt (1) einen Zuführungstrichter (3) und einen unter dem Trichter (3) angeordneten Häcksler (4) aufweist, dass der Trichter (3) so dimensioniert ist, dass er die abgeschnittenen Pflanzen aufnimmt, die über den Auffangbehälter des schwenkbaren Arms überlaufen, und dass er eine erste transversale Begrenzung, die in einer festen Platte (7) besteht, und eine zweite transversale Begrenzung aufweist, die aus einem sich mit niedriger Geschwindigkeit drehenden Zylinder (9) besteht, der mit radialen Schaufeln (10) ausgestattet ist, wobei die Rotationsrichtung des Zylinders so ist, dass die Schaufeln (10) die in den Trichter eingeführten abgeschnittenen Pflanzen in das Innere des Zwischenraums (17) zwischen der festen Platte (7) und dem Zylinder (9) hineindrücken.

2. Vorrichtung nach Anspruch 1, **dadurch gekennzeichnet, dass** jede Schaufel (10) an ihrem freien Ende (10a) in der Rotationsrichtung umgebogen ist.

3. Vorrichtung nach Anspruch 1 oder 2, **dadurch gekennzeichnet, dass** der sich drehende Zylinder mit zwei radialen Schaufeln (10) ausgestattet ist, die einander gegenüberliegend angeordnet sind, und dass der Zylinder sich mit einer Geschwindigkeit zwischen 50 und 60 UpM dreht.

4. Vorrichtung nach einem der Ansprüche 1 bis 3, **dadurch gekennzeichnet, dass** die feste Platte (7) gekrümmt (gewölbt) ist, um den Zwischenraum (17) zu begrenzen.

5. Vorrichtung nach einem der Ansprüche 1 bis 4, **dadurch gekennzeichnet, dass** der Häcksler (4) aus einer Walze (11) mit Balken (12) und Gegenmessern (13) besteht.

6. Vorrichtung nach Anspruch 5, **dadurch gekennzeichnet, dass** die Rotationsgeschwindigkeit der Walze (11) in der Größenordnung von 2100 bis 2200 UpM liegt.

7. Vorrichtung nach einem der Ansprüche 1 bis 6, **dadurch gekennzeichnet, dass** unter dem Häcksler (4) ein gebogenes Umlenkblech (5) angeordnet ist, welches die Aufgabe hat, die Häckslerrückstände aus der Vorrichtung nach hinten auszuwerfen, wo sie dann nach dem Passieren der Reinigungsvorrichtung auf dem Boden verteilt werden.

## Claims

1. Cleaning up machine, especially for ditches, comprising an articulated arm with its free end fitted with a wide cutting device which is itself extended by a container in which cut vegetation can be collected, **characterised in that**, at its rear (1), it has a loading hopper (3) and a crusher (4) arranged under the hopper (3), **in that** the hopper (3) is of a size to take the cut vegetation tipped out from the container of the articulated arm, and **in that** it includes a first transverse upright consisting of a fixed plate (7) and a second transverse post consisting of a slowly turning cylinder (9), fitted with radial blades (10), the direction of rotation of the said cylinder being such that the blades (10) fold down the cut vegetation loaded into the hopper towards the inside of the space (17) between the fixed plate (7) and the cylinder (9).

2. Machine according to Claim 1 **characterised in that** each blade (10) is bent over, towards its free end (10a), in the direction of rotation.

3. Machine according to Claims 1 or 2, **characterised in that** the rotating cylinder has two radial blades (10), diametrally opposite each other, and the cylinder rotates at a speed between 50 and 60 r.p.m.

4. Machine according to one of the Claims 1 to 3, **characterised in that** the fixed plate (7) is bent to limit the space (17).

5. Machine according to one of the Claims 1 to 4, **characterised in that** the crusher (4) consists of a drum (11) with flails (12) and counter-blades (13).

6. Machine according to Claim 5 **characterised in that** the speed of rotation of the drum (11) is in the region of 2100 and 2200 r.p.m.

7. Machine according to one of the Claims 1 to 6, **characterised in that** under the crusher (4) a curved baffle plate (5) is arranged, the effect of this being to throw to the rear of the machine the crushed residue which is thus dispersed on the ground after the cleaning up machine passes.
